# EUROPÄISCHE PATENTSCHRIFT

(11) **EP 1 619 110 B1**
(45) Veröffentlichungstag und Bekanntmachung des Hinweises auf die Patenterteilung: **02.05.2007**
(21) Anmeldenummer: 05013813.0
(22) Anmeldetag: 27.06.2005
(51) Int. Cl.: B62D 29/04, B29C 44/12

(54) **Geschäumtes Fahrzeugteil und Verfahren zum Herstellen eines solchen Fahrzeugteils**
Foamed vehicle component and method for manufacturing such a component
Composant de véhicule en mousse synthétique et procédé de fabrication d'un tel composant

(30) Priorität: 22.07.2004 DE 102004035473
(43) Veröffentlichungstag der Anmeldung: 25.01.2006
(73) Patentinhaber: ArvinMeritor GmbH, 63128 Dietzenbach (DE)
(72) Erfinder: Biewer, Christian, 64839 Altheim (DE); Jugl, Michael, 65843 Sulzbach (DE); Ludwig, Matthias, 38159 Vechelde (DE)
(74) Vertreter: Kitzhofer, Thomas

(56) Entgegenhaltungen:
- DE-A1- 10 133 894
- DE-A1- 10 223 579

## Beschreibung

Die Erfindung betrifft ein geschäumtes Fahrzeugteil mit einem geschäumten Hauptteil und einem in dem Hauptteil durch Umschäumen eingebetteten, als Befestigungselement dienenden Einleger und ferner ein Verfahren zum Herstellen eines solchen Fahrzeugteils. Ein solches Fahrzeugteil ist zum Beispiel aus DE 10223579 A bekannt.

Geschäumte Fahrzeugteile, insbesondere mit einem glasfaserverstärkten PU-Material, sind bereits bekannt, wobei die Glasfasern beispielsweise im sogenannten LFI (Long-Fibre-Injection)-Verfahren in den Kunststoff eingeschossen werden. Ebenfalls sind Einleger in geschäumten Fahrzeugteilen bekannt, die der Anbringung verschiedener Bedienelemente oder der Befestigung der Fahrzeugteile dienen. Bei den bekannten geschäumten Fahrzeugteilen besteht jedoch die Gefahr, daß sich Einfallstellen, Dellen oder Erhebungen an der von außen sichtbaren Oberfläche aufgrund der unterschiedlichen Ausdehnungskoeffizienten der eingesetzten Einleger und der Hinterschäumung bilden. Diese Einfallstellen sind von außen sichtbar und verringern dadurch die Oberflächenqualität erheblich.

Der Erfindung liegt das Problem zugrunde, ein Fahrzeugteil herzustellen, das eine sehr gute Oberflächenqualität (z.B. Class A-Oberfläche) trotz Einlage von Einlegern aufweist. Ferner soll ein einfaches Verfahren zum Herstellen des Fahrzeugteils angegeben werden.

Diese Probleme werden bei einem gattungsgemäßen Fahrzeugteil dadurch gelöst, daß der Einleger zumindest abschnittsweise in dem im Hauptteil eingebetteten Abschnitt von einem elastischen Zwischenteil umgeben ist, dessen Nachgiebigkeit größer als die des Hauptteils ist, so daß der Einleger nachgiebig im starren Hauptteil gelagert ist. Die mit der Erfindung erzielten Vorteile bestehen insbesondere darin, daß sich bei dem erfindungsgemäßen geschäumten Fahrzeugteil die üblicherweise einen höheren Wärmedehnungskoeffizienten als der Hauptteil aufweisenden Einleger von außen nicht abzeichnen, das heißt, die Oberfläche keine Einfallstellen, Dellen oder Erhebungen aufweist, da die vorhandenen unterschiedlichen Wärmeausdehnungskoeffizienten der unterschiedlichen Materialien des Einlegers und der Hinterschäumung durch den elastischen Zwischenteil ausgeglichen werden. Somit ist ein Toleranzausgleich sowohl während des Einschäumens als auch im montiertem Zustand gewährleistet. Ferner wird die Dichtung zwischen Hinterschäumung und Einleger verbessert, was ohne den Einsatz von bislang vorgesehen elastischen Dichtungen erreicht wird, die ständigem Verschleiß unterworfen waren. Der Einleger ist von außen zugänglich und liegt vorzugsweise teilweise frei. Durch das elastische Zwischenteil lassen sich am Einleger auch Teile befestigen, die vom Hauptteil weitgehend schwingungsentkoppelt gelagert werden sollen, z.B. Antriebs- und Stellmotoren. Damit wird die Schwingungsübertragung auf den Hauptteil reduziert.

Vorzugsweise ist das Fahrzeugteil ein Karosserieanbauteil, insbesondere ein Dachmodul. Karosserieanbauteile sind solche Teile, die an der Fahrzeugkarosserie angebracht werden. Die Erfindung betrifft insbesondere solche Anbauteile, die die Außenhaut des Fahrzeugs im fertigmontierten Zustand definieren und von außen sichtbar sind. Solche Karosserieanbauteile sollen ein geringes Gewicht haben, optisch an angrenzende, lackierte Teile angepaßt sein und eine sehr gute Oberflächenqualität haben. Gerade im Bereich von Dachmodulen, worunter auch Dachmodule mit Schiebedacheinheit oder Lamellendächer fallen, haben sich zunehmend Kunststoffverbundteile als besonders vorteilhaft erwiesen. Andere Anbauteile, auf die die vorliegende Erfindung anwendbar ist, sind zum Beispiel Kotflügel, Türen und Klappen (Motorhaube, Kofferraumdeckel, Kraftstoffdeckel) von Fahrzeugen.

Ferner ist der Zwischenteil bevorzugt so ausgebildet, daß es dem Einleger eine Beweglichkeit in allen Richtungen relativ zum Hauptteil gibt. Dadurch wird ein Toleranzausgleich ermöglicht, denn der Einleger kann sich bei der Befestigung an dem angrenzenden Teil an dessen Position anpassen, was wiederum auch eine sehr gute Oberflächenqualität gewährleistet. Die Bewegungen des Einlegers können in translatorischer (axialer, radialer) Richtung, die beispielsweise bei der Ausführung des Einlegers zur Anbringung verschiedener Bedienelemente von Lichteinrichtungen oder ähnlichem vorhanden sind, oder in Grenzen in rotatorischer Richtung erfolgen. Insbesondere ist eine Kippbewegung möglich, die vor allem bei der Ausführung der Einleger als Befestigungselement des Dachmoduls an der Karosserie wegen der großen Lagetoleranzen der karosserieseitigen Befestigungslöcher auftritt.

Vorzugsweise ist der Zwischenteil des Fahrzeugteils eine Umschäumung oder Umspritzung.

Der Zwischenteil ist an seinem in dem Hauptteil eingebetteten Ende z. B. verdickt, und der Hauptteil bzw. der Zwischenteil hintergreift dieses Ende. Dies gewährleistet, daß der Einleger zusätzlich gegen ein Herausziehen in axialer Richtung gesichert ist.Vorzugsweise hat der Hauptteil eine Rückseite, an der der Einleger teilweise freiliegt und der Zwischenteil eine gegenüber dem Hauptteil vorspringende Dichtlippe bildet. Die notwendige Dichtung wurde bisher mit elastischen Dichtmitteln oder dergleichen erreicht, die auf dieser Seite vorgesehen waren und ständig dem Verschleiß unterworfen waren. Bei der gezeigten Ausführung ist diese Dichtung ohne große Kosten gewährleistet.

Die vollständige Dichtigkeit wird auch dadurch erreicht, daß die Dichtlippe ringförmig geschlossen ist und um den Einleger herum verläuft.

Gemäß der bevorzugten Ausführungsform ist der Hauptteil vorderseitig von einer tiefgezogenen Folie bedeckt und wird durch Hinterschäumen der Folie erzeugt. Diese Folie ist eine Kunststoff- oder Aluminiumfolie, wobei die Kunststoffolie vorzugsweise durchgefärbt ist, damit die Außenlackierung entfallen kann. Die Außenhaut aus Aluminium ist z. B. mit einer sehr dünnen durchgefärbten Kunststoffschicht versehen. Dadurch kann die Außenlackierung entfallen, und somit ist eine billige Herstellung gewährleistet.

Bei einer Ausführungsform hat der Einleger einen vom Hauptteil vorstehenden Gewindebolzenabschnitt, damit er an der Karosserie befestigt werden kann. Solche Einleger können aber auch Hohlkörper sein, z.B. Gewindebuchsen. Die Einleger können ferner der Befestigung von zusätzlichen Anbauteilen, z.B. Dachöffnungssystemen, Führungen von elektrischen Leitungen oder Vorrichtungen, wie Lichteinrichtungen, Haltegriffe, Airbags etc. dienen.Die Erfindung ist nicht nur für Dachmodule, sondern auch für Harttops, Innenhimmel und andere Kfz-Außen- und Innnenverkleidungs-, Beplankungs- und Strukturbauteile zu verwenden, wobei das Hinterschäumen mittels des bekannten LFI (Long-Fibre-Injection)-Verfahrens erfolgt.

Das erfindungsgemäße Verfahren zum Herstellen eines geschäumten Fahrzeugteils, insbesondere eines Karosserieanbauteils, ist durch folgende Schritte gekennzeichnet:
a) der als Befestigungselement dienende Einleger wird zumindest abschnittsweise mit einem Zwischenteil aus einem Material ummantelt, das nachgiebiger als der Hauptteil ist,
b) die entstandene Einheit aus Einleger und Zwischenteil wird in das Schäumwerkzeug eingebracht und wenigstens teilweise so umschäumt, daß der Einleger zum Hauptteil in ausgehärtetem Zustand federnd nachgiebig gelagert ist.

Das Anbringen des Zwischenteils am Einleger erfolgt dabei durch direktes Umschäumen oder Umspritzen des Einlegers. Anschließend wird diese Einheit gemeinsam in das Schäumwerkzeug eingelegt.

Weitere Merkmale und Vorteile ergeben sich aus der nachfolgenden Beschreibung und aus der Zeichnung, auf die Bezug genommen wird.
Figur 1 zeigt eine vergrößerte Schnittansicht durch das geschäumte Fahrzeugteil im Schäumwerkzeug bei bereits leicht angehobenem Oberteil des Schäumwerkzeugs und
Figur 2 zeigt das Fahrzeugteil mit einem angeflanschten Antriebsmotor.

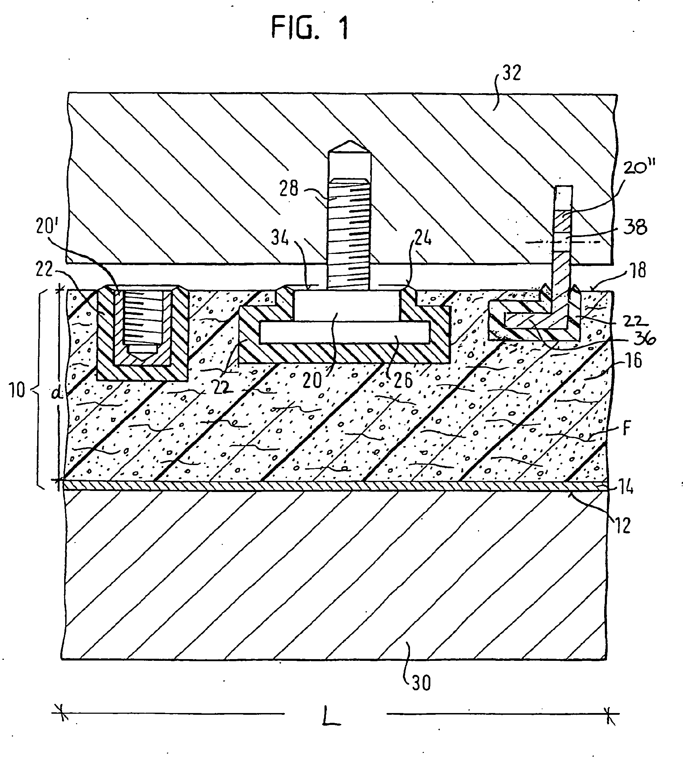

In Figur 1 ist ein geschäumtes Fahrzeugteil 10 in Form eines Karosserieanbauteils, insbesondere eines Dachmoduls, abgebildet. Die im eingebauten Zustand von außen sichtbare Vorderseite ist mit 12 bezeichnet. Das Karosserieanbauteil 10 weist vorderseitig eine sehr dünne (<1,5 mm) tiefgezogene Folie 14 auf, die aus Kunststoff oder Aluminium besteht und vorzugsweise durchgefärbt ist, um eine außenseitige Lackierung zu ersetzen. Unmittelbar an die Folie 14 schließt sich ein Hauptteil 16 an, der aus einem faserverstärktem PU-Schaum besteht, wobei die Glasfasern F durch das LFI-Verfahren in den Schaum eingebracht werden und dabei die durch den Hauptteil 16 gebildete Schicht verstärken. Der Hauptteil 16 weist in Figur 1 eine konstante Stärke d über die gesamte, gezeigte Länge L auf, kann jedoch auch mit verschiedenen Stärken ausgeführt werden. Auf der Rückseite 18 des Fahrzeugteils 10 kann ein Dekorteil aus Textil, Kunststoff, Al- oder Fe-Blech angebracht werden (nicht gezeigt). Ein Einleger 20 aus Metall ist von einem Zwischenteil 22 aus elastischem Material umgeben und im Hauptteil 16 eingebettet. Der Zwischenteil 22 ist in Figur 1 vollständig von dem elastischem Material spaltfrei umgeben, er kann jedoch ebenfalls nur abschnittsweise davon umgeben sein. Durch die größere Nachgiebigkeit des Zwischenteils 22 gegenüber dem Hauptteil 16 ist dem Einleger 20 eine gewisse Beweglichkeit in allen Richtungen relativ zum Hauptteil 16 erlaubt.

Eine Dichtlippe 24, die den Einleger 20 ringförmig umgibt, gewährleistet, daß beim Schäumen des Hauptteils 16 kein Schaum zwischen dem Oberteil 32 des Schäumwerkzeugs und dem Einleger 20 eindringen kann. Bei geschlossenem Schäumwerkzeug liegt der Einleger 20 rückseitig vollflächig am Oberteil 32 an. Die Dichtlippe 24 wird durch einen im Querschnitt dreieckigen, gegenüber der Rückseite des Einlegers 20 vorspringenden Wulst des Zwischenteils 22 gebildet. Die erforderliche Dichtigkeit wird somit ohne zusätzliche elastische Dichtmittel oder dergleichen erreicht, die bislang am Oberteil 32 vorgesehen und ständigem Verschleiß unterworfen waren.

Der Einleger 20 weist in dieser Ausführungsform ein verdicktes Ende 26 an seinem eingebetteten Abschnitt auf. Der Hauptteil 16 bzw. der Zwischenteil 22 hintergreifen dieses Ende 26 und befestigen es dadurch zusätzlich gegen Herausziehen. Der Einleger 20 hat in dieser Ausführungsform einen vorstehenden Gewindebolzenabschnitt 28. Es sind jedoch andere Ausführungsformen für den Einleger 20 wie eingangs erwähnt denkbar.

In Figur 1 ist darüber hinaus das Schäumwerkzeug dargestellt, mit dessen Hilfe das Fahrzeugteil 10 wie die eingangs genannten Dachmodule, Türen und Klappen etc. hergestellt werden. Das Schäumwerkzeug besteht aus einem Ober- und einem Unterteil 32 bzw. 30, die beim Zusammenfahren einen mit Kunststoff befüllten Hohlraum bilden.

Bei dem Verfahren zum Herstellen eines geschäumten Fahrzeugteils 10 wird in das Unterteil 30 die tiefgezogene Folie 14 eingelegt. Auf der Unterseite des Oberteils 32 kann, falls erwünscht, eine Dekorfolie aufgebracht werden (nicht gezeigt). Anschließend wird die Einheit, die aus dem Einleger 20 und dem Zwischenteil 22 besteht, am Oberteil 32 befestigt. Das Zwischenteil 22 wurde zuvor durch ein Schäum- oder Spritzverfahren direkt am Einleger 20 hergestellt. Der Gewindebolzenabschnitt 28 ragt dabei in eine Positionieröffnung im Oberteil 32, und die Dichtlippe 24 und der plane rückseitige Abschnitt 34 drücken gegen das Oberteil 32.

Bei geöffnetem Schäumwerkzeug wird flüssiges PU-Material rückseitig auf die Folie 14 aufgebracht, wobei Glasfasern mit eingeschossen werden (LFI-Verfahren). Ober- und Unterteil 32, 30 werden zusammengefahren. Das PU-Material schäumt aus und füllt den sich zwischen Ober- und Unterteil 32, 30 bildenden Hohlraum aus, der nach dem Schäumen den Hauptteil 16 bildet.

Der Einleger 20 ist durch den elastischen Zwischenteil 22 in der Schaumstoffschicht 16 beweglich eingebettet und kann sich in alle Richtungen um ein bestimmtes Maß bewegen, um z. B. die verschiedenen Ausdehnungen der verschiedenen Materialien sowohl beim und unmittelbar nach dem Schäumen als auch nach der Montage durch das elastische Material des Zwischenteils 22 auszugleichen.

In Figur 1 ist ein weiterer Einleger 20' in Form einer Gewindebuchse aus Metall dargestellt, der ebenfalls in dem Zwischenteil 22 eingebettet ist. Die Einheit aus Zwischenteil 22 und Einleger 20' ist wiederum im Hauptteil 16 eingebettet.

In Figur 1 ist ein Einleger 20" in einer dritten Ausführungsform gezeigt, der mit einem Haltewinkel vergleichbar ist, da er ein abgewinkeltes Ende 36 hat und einen aus dem Hauptteil 16 vorstehenden Abschnitt mit einer zylindrischen Aussparung 38, in der ein Befestigungsmittel (nicht gezeigt) eingreifen kann. Das abgewinkelte Ende 36 ist in den Hauptteil 16 eingebettet. Der Einleger 20" kann der Befestigung von zusätzlichen Anbauteilen, z.B. Lichteinrichtungen, Haltegriffe, Sonnenschutzblenden etc. dienen.

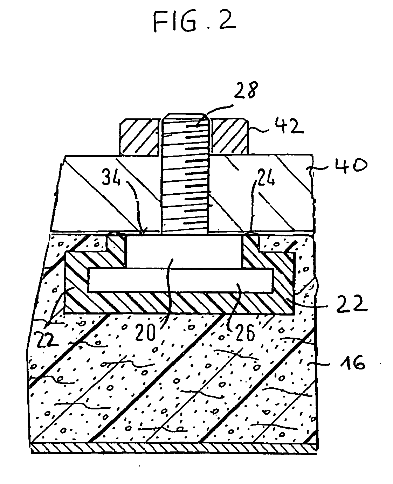

Die Ausführungsform nach Figur 2 zeigt einen angeflanschten elektrischen Antriebs- oder Stellmotor, der am Einleger 20 mit seinem Flansch 40 angeschraubt ist. Eine Mutter 42 dient der Arretierung. Durch das elastische Zwischenteil 22 und die Dichtlippe 24, welche für einen Abstand von Flansch 40 zum Hauptteil 16 sorgt, ist der Motor schwingungsentkoppelt am Hauptteil 16 gelagert.

## Patentansprüche

1. Geschäumtes Fahrzeugteil (10), mit
einem geschäumten Hauptteil (16) und
einem in dem Hauptteil (16) durch Umschäumen eingebetteten, als Befestigungselement dienenden Einleger (20; 20'; 20"),
**dadurch gekennzeichnet, daß**
der Einleger (20; 20'; 20") zumindest abschnittsweise in dem im Hauptteil (16) eingebetteten Abschnitt von einem elastischen Zwischenteil (22) umgeben ist, dessen Nachgiebigkeit größer als die des Hauptteils (16) ist, so daß der Einleger (20; 20'; 20") nachgiebig im Hauptteil (16) gelagert ist.

2. Fahrzeugteil nach Anspruch 1, **dadurch gekennzeichnet, daß** es ein Karosserieanbauteil (10), insbesondere ein Dachmodul ist.

3. Fahrzeugteil nach Anspruch 1 oder 2, **dadurch gekennzeichnet, daß** der Zwischenteil (22) so ausgebildet ist, daß es dem Einleger (20; 20'; 20") eine Beweglichkeit in allen Richtungen relativ zum Hauptteil (16) gibt.

4. Fahrzeugteil nach einem der vorhergehenden Ansprüche, **dadurch gekennzeichnet, daß** der Zwischenteil (22) eine Umschäumung oder Umspritzung ist.

5. Fahrzeugteil nach einem der vorhergehenden Ansprüche, **dadurch gekennzeichnet, daß** der Einleger (20; 20") an seinem in dem Hauptteil (16) eingebetteten Ende (26) verdickt ist und der Hauptteil (16) das verdickte Ende (26) hintergreift.

6. Fahrzeugteil nach einem der vorhergehenden Ansprüche, **dadurch gekennzeichnet, daß** der Einleger (20; 20") an seinem in dem Hauptteil (16) eingebetteten Ende (26) verdickt ist und der Zwischenteil (22) das verdickte Ende (26) hintergreift.

7. Fahrzeugteil nach einem der vorhergehenden Ansprüche, **dadurch gekennzeichnet, daß** der Hauptteil (16) eine Rückseite (18) hat, an der der Einleger (20; 20'; 20") teilweise freiliegt, und daß der Zwischenteil (22) eine gegenüber dem Hauptteil (16) vorspringende Dichtlippe (24) bildet.

8. Fahrzeugteil nach einem der vorhergehenden Ansprüche, **dadurch gekennzeichnet, daß** der Zwischenteil (22) eine gegenüber dem Hauptteil (16) vorspringende Dichtlippe (24) bildet, die ringförmig geschlossen um den Einleger (20; 20'; 20") herum verläuft.

9. Fahrzeugteil nach einem der vorhergehenden Ansprüche, **dadurch gekennzeichnet, daß** der Hauptteil (16) vorderseitig von einer tiefgezogenen Folie (14) bedeckt ist und der Hauptteil (16) durch Hinterschäumen der Folie (14) erzeugt ist.

10. Fahrzeugteil nach einem der vorhergehenden Ansprüche, **dadurch gekennzeichnet, daß** der Einleger (20) einen vom Hauptteil (16) vorstehenden Gewindebolzenabschnitt (28) hat.

11. Fahrzeugteil nach einem der Ansprüche 1 bis 9, **dadurch gekennzeichnet, daß** der Einleger (20') eine Gewindebuchse ist.

12. Fahrzeugteil nach einem der vorhergehenden Ansprüche, **dadurch gekennzeichnet, daß** der Hauptteil (16) durch ein LFI (Long-Fibre-Injection)-Schäumverfahren hergestellt ist.

13. Verfahren zum Herstellen eines geschäumten Fahrzeugteils nach einem der vorhergehenden Ansprüche, insbesondere eines Karosserieanbauteils (10), **gekennzeichnet durch** die folgenden Schritte:
a) der als Befestigungselement dienende Einleger (20; 20'; 20") wird zumindest abschnittsweise mit einem Zwischenteil (22) aus einem Material ummantelt, das nachgiebiger als der Hauptteil (16) ist,
b) die entstandene Einheit aus Einleger (20; 20'; 20") und Zwischenteil (22) wird in das Schäumwerkzeug eingebracht und wenigstens teilweise so umschäumt, daß der Einleger (20; 20'; 20") zum Hauptteil (16) in ausgehärtetem Zustand federnd nachgiebig gelagert ist.

14. Verfahren nach Anspruch 13, **dadurch gekennzeichnet, daß** der Zwischenteil (22) durch Schäumen oder Spritzen direkt am Einleger (20; 20'; 20") angebracht wird.

## Claims

1. A foamed vehicle component (10), comprising
a foamed main component (16) and
an insert piece (20; 20'; 20") serving as a fastening element and embedded in the main component (16) by means of foaming,
**characterized in that**
the insert piece (20; 20'; 20"), in the portion embedded in the main component (16), is surrounded at least in sections by an elastic intermediate component (22), the pliability of which is larger than that of the main component (16), so that the insert piece (20; 20'; 20") is resiliently supported in the main component (16).

2. The vehicle component according to claim 1, **characterized in that** it is a car body attachment part (10), in particular a roof module.

3. The vehicle component according to claim 1 or 2, **characterized in that** the intermediate component (22) is configured such that it gives the insert piece (20; 20'; 20") mobility in all directions relative to the main component (16).

4. The vehicle component according to any of the preceding claims, **characterized in that** the intermediate component (22) is applied by foaming or injection-molding.

5. The vehicle component according to any of the preceding claims, **characterized in that** the insert piece (20; 20") is thickened at its end (26) embedded in the main component (16), and the main component (16) engages behind the thickened end (26).

6. The vehicle component according to any of the preceding claims, **characterized in that** the insert piece (20'; 20") is thickened at its end (26) embedded in the main component (16), and the intermediate component (22) engages behind the thickened end (26).

7. The vehicle component according to any of the preceding claims, **characterized in that** the main component (16) has a rear side (18) at which the insert piece (20; 20'; 20") is partially exposed, and **in that** the intermediate component (22) forms a sealing lip (24) projecting with respect to the main component (16).

8. The vehicle component according to any of the preceding claims, **characterized in that** the intermediate component (22) forms a sealing lip (24) projecting with respect to the main component (16) and extending around the insert piece (20; 20'; 20") so as to be annularly closed.

9. The vehicle component according to any of the preceding claims, **characterized in that** a front side of the main component (16) is covered by a deep-drawn foil (14) and the main component (16) is produced by providing the foil (14) with a foamed backing.

10. The vehicle component according to any of the preceding claims, **characterized in that** the insert piece (20) has a threaded bolt section (28) projecting from the main component (16).

11. The vehicle component according to any of the claims 1 to 9, **characterized in that** the insert piece (20') is a threaded bushing.

12. The vehicle component according to any of the preceding claims, **characterized in that** the main component (16) is manufactured by a LFI (long fiber injection) foaming method.

13. A method of producing a foamed vehicle component according to any of the preceding claims, in particular a car body attachment part (10), **characterized by** the following steps:
a) the insert piece (20; 20'; 20") serving as a fastening element is at least in sections encased with an intermediate component (22) made of a material which has a larger pliability than the main component (16),
b) the resultant unit of insert piece (20; 20'; 20") and intermediate component (22) is introduced in the foaming tool and is embedded in foam at least in sections such that in the cured state the insert piece (20; 20'; 20") is elastically and resiliently supported relative to the main component (16).

14. The method according to claim 13, **characterized in that** the intermediate component (22) is directly applied on the insert piece (20; 20'; 20") by foaming or injection-molding.

## Revendications

1. Partie de véhicule (10) moussée, comportant
une partie principale (16) moussée et
une pièce d'insert (20 ; 20' ; 20") noyée par enrobage de mousse et servant d'élément de fixation,
**caractérisée en ce que**
la pièce d'insert (20 ; 20' ; 20") est entourée, au moins par sections, dans le tronçon noyé dans la partie principale (16), par une partie intermédiaire (22) élastique dont la souplesse est plus grande que celle de la partie principale (16), de sorte que la pièce d'insert (20 ; 20' ; 20") est montée souple dans la partie principale (16).

2. Partie de véhicule selon la revendication 1, **caractérisée en ce qu'**il s'agit d'un composant de carrosserie (10), en particulier d'un module de toit.

3. Partie de véhicule selon la revendication 1 ou 2, **caractérisée en ce que** la partie intermédiaire (22) est réalisée telle sorte qu'elle donne à la pièce d'insert (20 ; 20' ; 20") une mobilité dans toutes les directions par rapport à la partie principale (16).

4. Partie de véhicule selon l'une des revendications précédentes, **caractérisée en ce que** la partie intermédiaire (22) est un enrobage de mousse ou un enrobage par moulage par injection.

5. Partie de véhicule selon l'une des revendications précédentes, **caractérisée en ce que** la pièce d'insert (20 ; 20") est renflée à son extrémité (26) noyée dans la partie principale (16) et la partie principale (16) s'engage derrière l'extrémité renflée (26).

6. Partie de véhicule selon l'une des revendications précédentes, **caractérisée en ce que** la pièce d'insert (20 ; 20") est renflée à son extrémité (26) noyée dans la partie principale (16) et la partie intermédiaire (22) s'engage derrière l'extrémité renflée (26).

7. Partie de véhicule selon l'une des revendications précédentes, **caractérisée en ce que** la partie principale (16) a une face postérieure (18) sur laquelle la pièce d'insert (20 ; 20' ; 20") est partiellement dégagée, et **en ce que** la partie intermédiaire (22) forme une lèvre d'étanchéité (24) en saillie par rapport à la partie principale (16).

8. Partie de véhicule selon l'une des revendications précédentes, **caractérisée en ce que** la partie intermédiaire (22) forme une lèvre d'étanchéité (24) en saillie par rapport à la partie principale (16), laquelle s'étend autour de la pièce d'insert (20 ; 20' ; 20") en étant fermée de forme annulaire.

9. Partie de véhicule selon l'une des revendications précédentes, **caractérisée en ce que** la partie principale (16) est recouverte sur la face antérieure par une feuille (14) emboutie et la partie principale (16) est produite en recouvrant de mousse la face postérieure de la feuille (14).

10. Partie de véhicule selon l'une des revendications précédentes, **caractérisée en ce que** la pièce d'insert (20) a un tronçon de boulon fileté (28) faisant saillie depuis la partie principale (16).

11. Partie de véhicule selon l'une des revendications 1 à 9, **caractérisée en ce que** la pièce d'insert (20') est une douille taraudée.

12. Partie de véhicule selon l'une des revendications précédentes, **caractérisée en ce que** la partie principale (16) est réalisée par un procédé de moussage LFI (Long-Fibre Injection).

13. Procédé de fabrication d'une partie de véhicule moussée selon l'une des revendications précédentes, en particulier d'un composant de carrosserie (10), **caractérisé par** les étapes suivantes :
a) la partie d'insert (20 ; 20' ; 20") est enveloppée au moins par sections par une partie intermédiaire (22) en un matériau qui est plus souple que la partie principale (16),
b) l'unité résultante constituée par la partie d'insert (20 ; 20' ; 20") et la partie intermédiaire (22) est introduite dans l'outil de moussage et au moins partiellement moussée de telle sorte qu'à l'état durci, la partie d'insert (20 ; 20' ; 20") est montée de manière élastiquement souple par rapport à la partie principale (16).

14. Procédé selon la revendication 13, **caractérisé en ce que** la partie intermédiaire (22) est appliquée directement sur la partie d'insert (20 ; 20' ; 20") par moussage ou par moulage par injection.
